# EUROPÄISCHE PATENTSCHRIFT

(11) **EP 4 385 078 B1**
(45) Veröffentlichungstag und Bekanntmachung des Hinweises auf die Patenterteilung: **27.05.2026**
(21) Anmeldenummer: 22765027.2
(22) Anmeldetag: 09.08.2022
(51) Int. Cl.: H01M 4/1395, H01M 10/0525, H01M 10/058, H01M 10/42

(54) **VERFAHREN ZUR HERSTELLUNG EINER SILIZIUM-ELEKTRODE ALS ANODE FÜR EINE LITHIUM-BATTERIE**
METHOD FOR PRODUCING A SILICON ELECTRODE AS AN ANODE FOR A LITHIUM BATTERY
PROCÉDÉ DE PRODUCTION D'UNE ÉLECTRODE EN SILICIUM EN TANT QU'ANODE POUR UNE BATTERIE AU LITHIUM

(30) Priorität: 09.08.2021 DE 102021120615; 09.08.2021 DE 102021120624; 09.08.2021 DE 102021120635; 13.10.2021 DE 102021126477
(43) Veröffentlichungstag der Anmeldung: 19.06.2024
(73) Patentinhaber: NorcSi GmbH, 06120 Halle (Saale) (DE)
(72) Erfinder: REICHMANN, Udo, 01723 Wilsdruff (DE); NEUBERT, Marcel, 01731 Kreischa (DE); KRAUSE-BADER, Andreas, 01159 Dresden (DE)
(74) Vertreter: Lippert Stachow Patentanwälte Rechtsanwälte Partnerschaft mbB
(86) Internationale Anmeldenummer: PCT/EP2022/072293
(87) Internationale Veröffentlichungsnummer: WO 2023/017008

(56) Entgegenhaltungen:
- CN-A- 112 563 458
- US-A1- 2021 175 495

## Beschreibung

Die Erfindung betrifft ein Verfahren zur Herstellung einer Silizium-Elektrode als Anode für eine Lithium-Batterie.

Batterien sind elektrochemische Energiespeicher und werden in Primär- und Sekundärbatterien unterschieden; allgemeine Grundlagen und wesentliche Merkmale von Lithium (Li)-Ionen-Batterien sind zusammenfassend in einem Kompendium durch den Verein Deutscher Ingenieure (VDE) veröffentlicht worden, aus dem einige Grundlagen entnommen wurden (siehe https://www.dke.de/resource/blob/933404/dd44d15918ce4d4aefc3 63a4ef1490e1/kompendium-li-io-batterien-2021-de-data.pdf - 2022-01-20).

Primärbatterien sind elektrochemische Stromquellen, bei denen chemische Energie irreversibel in elektrische Energie umgewandelt wird. Eine Primärbatterie ist somit nicht wiederaufladbar. Sekundärbatterien, auch Akkumulatoren genannt, hingegen sind wiederaufladbare elektrochemische Energiespeicher, bei denen die ablaufende chemische Reaktion umkehrbar ist, so dass eine Mehrfachnutzung möglich ist. Elektrische Energie wird beim Laden in chemische Energie, beim Entladen wiederum von chemischer in elektrische Energie umgewandelt.

Bei einem jeweils zusammenhängenden vollständigen Lade- und Entladevorgang wird von einem Zyklus gesprochen. Mit der Anzahl der Zyklen ist die Lebensdauer einer Batterie verknüpft. Je nach Art, Anwendung und Handhabung variiert die Lebensdauer wiederaufladbarer Batterien. Lithium-Ionen-Batterien sind robust, haben eine hohe Zyklenfestigkeit und eine große Energiedichte.

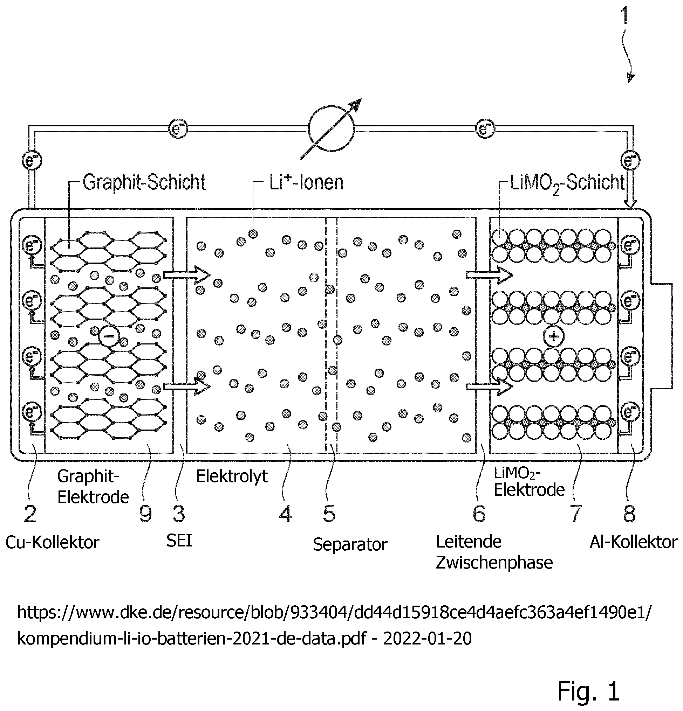

Batterie ist der Oberbegriff für zusammengeschaltete Zellen. Zellen sind galvanische Einheiten, die aus zwei Elektroden, Elektrolyten, Separator und Zellgehäuse bestehen. Figur 1 zeigt einen beispielhaften Aufbau und die Funktion einer Lithium-Ionen-Zelle beim Entladevorgang. Die Bestandteile einer Zelle werden nachfolgend kurz erläutert.

Jede Li-Ionen-Zelle besteht aus zwei unterschiedlichen Elektroden 7, 9, einer im geladenen Zustand negativ geladenen Elektrode 9 und einer im geladenen Zustand positiv geladenen Elektrode 7. Da bei der Energieabgabe, also bei der Entladung, Ionen von der negativ geladenen Elektrode zur positiv geladenen Elektrode wandern, wird die positiv geladene Elektrode Kathode 7 und die negativ geladene Elektrode Anode 9 genannt. Die Elektroden setzen sich jeweils aus einem Stromableiter 2, 8 (auch Kollektor genannt) und einem darauf aufgebrachten Aktivmaterial zusammen. Zwischen den Elektroden befinden sich zum einen der ionenleitende Elektrolyt 4, der den notwendigen Ladungsaustausch ermöglicht, und der Separator 5, der die elektrische Trennung der Elektroden gewährleistet.

Die Anode der Li-Ionen-Zelle kann aus einer Kupferfolie und einer Schicht aus Kohlenstoff bestehen. Als Kohlenstoffverbindung wird in der Regel natürlicher oder künstlicher Graphit verwendet, da er ein niedriges Elektrodenpotential besitzt und eine geringe Volumenausdehnung beim Lade- und Entladevorgang aufweist. Während des Ladevorgangs werden Lithium-Ionen reduziert und in die Graphitschichten eingelagert.

Es ist auch bekannt, bei Li-Batterie-Anoden anstelle Kohlenstoff Silizium zu verwenden. Silizium ist ein besonders geeignetes Anodenmaterial für Lithium-Batterien aufgrund der höchsten Speicherkapazität von theoretisch bis zu 4200mAh/g.

Die Kathode besteht beispielsweise aus Mischoxiden, die auf einem Aluminiumkollektor aufgebracht sind. Übergangsmetalloxide mit Cobalt (Co), Mangan (Mn) und Nickel (Ni) oder Aluminiumoxid (Al₂O₃) sind dabei die gängigsten Verbindungen. Die aufgebrachte Metalloxidschicht dient bei der Entladung der Zelle zur Einlagerung der Lithium-Ionen.

In Aufbauten für Lithium-Ionen-Batterien liefert typischerweise die Kathode die Lithiumatome zum Laden und Entladen in der Anode, die Batteriekapazität ist daher limitiert durch die Kathodenkapazität. Typische bisher verwendete Kathodenmaterialien sind z. B. Li(Ni,Co,Mn)O₂ und LiFePO₄. Aufgrund des Aufbaus der Kathode durch Lithium-Metalloxide ist eine Steigerung der Kapazität nur unwesentlich möglich.

Es ist bekannt, dass eine Vorlithiierung oder auch Pre-Lithiierung der Silizium-Anode eine geeignete Möglichkeit darstellt, um Lithiumverluste, gerade in den ersten Zyklen, zu kompensieren und die Lithium-Erhaltung während des Betriebs sicherzustellen. Unter Lithiierung wird die Einlagerung der Lithium-Ionen im Wirtsmaterial, z. B. des Siliziums oder des Graphits verstanden. Jedoch ist die Pre-Lithiierung ein aufwendiger Prozess. Sowohl in der CN 112 563 458 A also auch in der US 2021/0175495 A1 ist ein nasschemischer Prozess zur Pre-Lithiierung einer Silizium-Anode beschrieben. In einem elektrochemischen Vorlithiierungsprozess werden eine Li-Metallelektrode und die Anode elektronisch voneinander isoliert und die Anode wird mit einem niedrigen Strom oder einem elektrischen Kurzschluss geladen, um eine Lithiierung durchzuführen. Dieser Vorgang kann für mehrere Lade-/Entladezyklen, für einen definierten Zeitraum oder bis die Anode ein definiertes Potential erreicht, wiederholt werden. Der elektrochemische Vorlithiierungsprozess erfordert jedoch einen Wiedereinbauschritt der vorlithiierten Anode in die Lithium-Ionen-Batterie-Zelle, was den Aufwand erhöht und die Möglichkeit verringert, dieses Verfahren kommerziell einzusetzen.

Eine weitere Möglichkeit die Pre-Lithiierung durchzuführen, ist die Verwendung von stabilisiertem Li-Metallpulver. Jedoch muss die Zugabe von Lithium exakt dosiert werden, so dass nach dem Einbau kein Lithiumrest übrig bleibt; dies ist durch leichte Schwankungen der Schichthomogenität sehr schwer kontrollierbar. Ein weiterer Nachteil ist, dass hochreaktives Li-Metall verwendet wird, so dass der gesamte Prozess der Elektrodenherstellung oder zumindest Teile des Prozesses unter trockenen Atmosphärenbedingungen durchgeführt werden müssen, was die Kosten der Lithium-Ionen-Batterie (LIB)-Zellenproduktion weiter erhöht.

Eine andere Möglichkeit der Pre-Lithiierung ist, dem Elektrolyten in der Zelle einen Überschuss an Lithium-Salzen zuzusetzen. Jedoch verändern sich dadurch die Zellparameter, insbesondere die Leitfähigkeit des Elektrolyten. Dies ist im Betrieb der LIB unerwünscht.

Bezugnehmend auf Figur 1 wandern während des Entladens Lithium-Ionen von der Anode durch den Elektrolyten und Separator hin zur Kathode, wo sie reversibel eingelagert werden. Durch den ablaufenden Oxidationsprozess an der Anode werden Elektronen freigesetzt. Diese fließen von der negativ geladenen Anode über eine äußere elektrische Verbindung zur positiven Kathode, womit an dieser ein Reduktionsprozess stattfindet und Elektronen aufgenommen werden. Durch den äußeren Stromfluss können elektrische Verbraucher betrieben werden. Beim Laden vollzieht sich genau der umgekehrte Prozess.

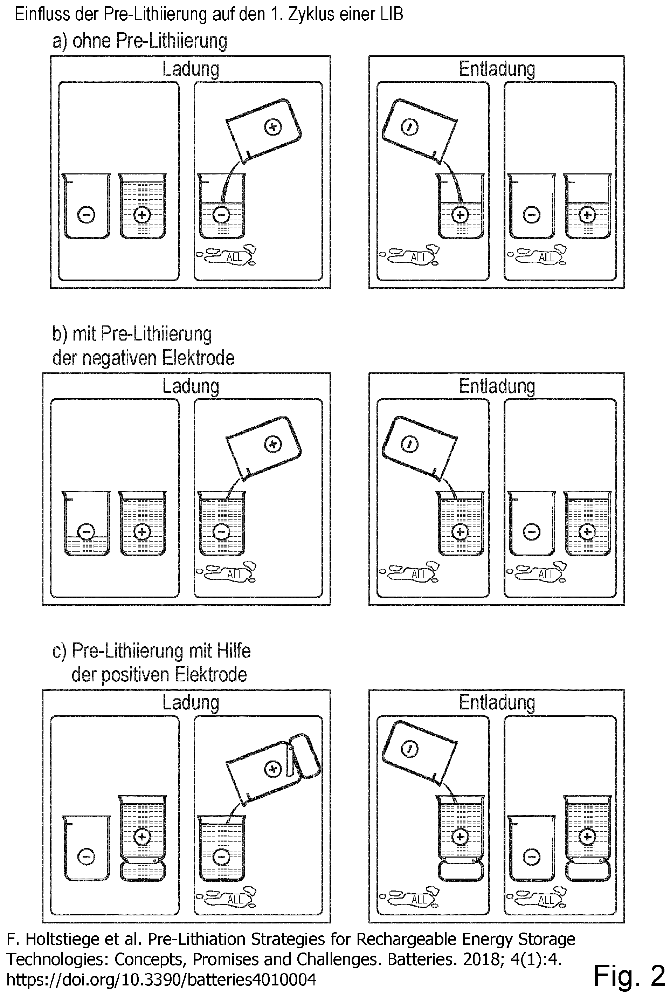

Der Elektrolyt fungiert beim Lade- und Entladevorgang als Vermittler zwischen den Reaktionen an den Elektroden und garantiert den Li-Ionen-Transport. Dabei muss er eine hohe Ionenleitfähigkeit aufweisen und im Spannungsbereich von 0 bis 4,5 V gegenüber Li/Li+ als Referenz sowie im Temperaturbereich, in dem die Batterie betrieben werden soll, stabil sein. Es gibt Flüssigelektrolyte, Polymerelektrolyte und Festelektrolyte sowie Mischungen (hybride Zellen) aus diesen. In geeigneten flüssigen und polymerisierten Elektrolyten bildet sich eine Deckschicht auf kohlenstoffbasierten Anoden aber auch direkt auf Silizium oder anderen Elektroden aus, die sogenannte Solid Electrolyte Interphase (SEI). Diese schützt die Anode vor der korrodierenden Elektrolytlösung und ist gleichzeitig für Lithium-Ionen durchlässig. Diese Schicht ist essenziell für den Einsatz von Lithium bzw. Lithium-Ionen-Einlagerungsverbindungen in Primär- und Sekundärzellen. Jedoch geht der Aufbau der SEI-Schicht in den ersten Zyklen des Batteriebetriebs mit einem Verlust an freien Lithium-Ionen einher, die dann für den Betrieb nicht mehr zur Verfügung stehen. Daher kommt die oben bereits genannte Pre-Lithiierung zur Anwendung, dessen Einfluss beispielhaft in Figur 2 dargestellt ist. Das Reservoir an Lithium in der Kathode ist begrenzt. Wird zusätzliches Lithium durch eine Pre-Lithiierung in die Anode eingebracht, können damit sonst unvermeidbare Verluste ausgeglichen werden. Fig. 2c zeigt, dass die Speicherkapazität der Kathode ausgeschöpft ist, ein Überschuss an Lithium kann darüber hinaus nicht eingebracht werden.

Der Separator trennt die beiden Elektroden voneinander, um einen aus direktem Kontakt resultierenden elektrischen Kurzschluss zu verhindern. Als Materialien werden zum Beispiel Polymer-Membrane oder keramische Separatoren oder Vliesstoffe und Glasfaser-Separatoren eingesetzt.

Die Energiedichte ist ein Maß für den Energieinhalt einer Zelle bzw. einer Batterie pro Volumen oder Masse. Sie hat damit z. B. direkten Einfluss auf die erzielbare Reichweite eines rein elektrisch betriebenen Fahrzeugs mit Traktionsbatterie bei gleicher Masse bzw. gleichem Volumen und wird beschrieben als spezifische [Wh/kg] oder volumetrische Energiedichte [Wh/l]. Eine Zelle mit hoher Energiedichte setzt eine Kombination zweier Elektrodenmaterialien mit hoher Ladungsdichte und Potentialdifferenz voraus.

Li-Ionen-Batterien können in energieoptimierte Batterien mit hohen Energiedichten, geringen Leistungsdichten und durchschnittlichen Entladeströmen sowie leistungsoptimierte Batterien mit geringeren Energiedichten, hohen Leistungsdichten und kurzzeitig sehr hohen Entladeströmen unterschieden werden. Erstere sind besonders für batterieelektrisch betriebene Fahrzeuge (BEV) wichtig, da die Reichweite des Fahrzeugs von der Kapazität abhängt. Dagegen werden bei hybrid-elektrischen Fahrzeugen (HEV) höchste Anforderungen an die Leistungsdichte und damit auch an die Hochstromfähigkeit beim Be- und Entladen gestellt.

Die Lebensdauer einer Li-Ionen-Batterie ist definiert als Zeitspanne zwischen dem Auslieferungszeitpunkt (Begin of Life, BoL), charakterisiert durch in der Regel definierte Eigenschaften im Lastenheft, und dem Zeitpunkt (End of Life, EoL), zu dem diese Eigenschaften einen zuvor definierten Wert durch Alterung unterschreiten. Das EoL für Batterien in Elektrofahrzeugen ist meist beim Unterschreiten der Speicherfähigkeit auf weniger als 80 % der Nennkapazität erreicht. Als Maß für die Lebensdauer wird unterschieden zwischen Zyklenlebensdauer bzw. Zyklenfestigkeit und kalendarischer Lebensdauer. Unter der Alterung ist eine Verschlechterung der elektrochemischen Eigenschaften (beispielsweise geringere Kapazität, höherer Innenwiderstand etc.) zu verstehen. Größtenteils wird diese durch den Energiedurchsatz bzw. Zyklisierung bedingt. Hohe Leistungsanforderungen bei der Be- und Entladung der Batterie haben eine hohe interne Wärmeproduktion zur Folge. Dadurch können die genutzten Elektrodenmaterialien irreversibel geschädigt und die Alterung der Zelle bzw. des Systems direkt beeinflusst und beschleunigt werden. Die Kapazität nimmt mit der Zeit ab, es kommt zu einem Anstieg des Innenwiderstands und einer entsprechenden Leistungsabnahme. Nebenreaktionen, die beim Laden im Elektrolyten stattfinden, wie beispielsweise Ausdehnvorgänge der Aktivmaterialien oder auch die dabei erfolgte mechanische Arbeit der Aktivmassen, wirken sich ebenfalls auf die Alterung aus.

In aktuellen Aufbauten für Lithium-Ionen-Akkumulatoren liefert die Kathode die Lithiumatome. Diese sind in den Zwischengitterplätzen eines Lithium Metalloxid Gitters reversibel eingelagert (Fig. 1). Beispielsweise haben kommerzielle Nickel-Mangan-Cobalt (NCM 622) Kathoden eine Speicherdichte von bis zu 210mAh/g. Um für hochkapazitive Batteriezellen eine ausreichende Kapazität zur Verfügung zu stellen, wird entsprechend die Schichtdicke der Kathode erhöht, damit eine Balancierung mit der Anode erfolgen kann. Unter Balancierung wird das Verhältnis der Absolutkapazität von Kathode und Anode verstanden. Üblich sind Verhältnisse von 1:1 bis 1:1,3 (Kathode : Anode), die Anode wird zum sicheren Betrieb größer dimensioniert, um ein Lithium Plating zu verhindern. Wird beim Laden/Entladen der Kathode über einen Grenzwert hinaus Lithium entnommen, bricht die Gitterstruktur des Metalloxid Gitters zusammen und Lithium lässt sich nicht mehr reversibel einbringen. Das günstigere jedoch mit geringerer Speicherdichte verwendete Lithium-Eisenphosphat (LiFePO₄) (bis zu 160 mAh/g) ist deutlich robuster. Die Batteriekapazität ist wie bereits erwähnt daher meist limitiert durch die Kathodenkapazität.

Insbesondere bei den ersten Zyklen einer Lithium-Ionen Batterie kommt es zu Verlusten durch die Zersetzung des Elektrolyten und der daraus erfolgende Aufbau einer SEI (Solid Electrolyte Interphase). Dabei und bei der ersten Beladung der Anoden kommt es zu irreversiblen Lithiumverlusten, die beim Zellbau bzw. der Balancierung berücksichtigt werden müssen. Die begrenzte Lithium Kapazität der Kathoden kann nicht nachhaltig vergrößert werden (Fig. 2c). Eine zusätzliche Einbringung von Lithium, insbesondere um die Anfangsverluste auszugleichen, kann daher nur über die Anode erfolgen.

Bisherige Lösungen nutzten die Pre-Lithiierung der Anode, indem reaktives Lithium verwendet wird, das als Pulver oder im geschmolzenen Zustand der Batterie in trockenen Prozessen zugeführt wird. Unter einem trockenen Prozess wird ein wasser- bzw. lösungsmittelfreier Prozess verstanden. Eine weitere Möglichkeit stellt die bloße In-Kontaktbringung einer Lithium Folie mit der zu lithiierenden Anode dar, bei der durch die hohe Lithium Diffusionsgeschwindigkeit auch bei Temperaturen im Bereich der Raumtemperatur eine Pre-Lithiierung erfolgt.

Prozesstechnisch aufwendig ist die Pre-Lithiierung über den Aufbau einer Halbzelle Si-Li und der elektrochemischen Beladung der Si-Anode mit Lithium. Eine weitere Möglichkeit ist die Verwendung eines Überschusses an Lithium-Salzen im Elektrolyten, um die Anfangsverluste der Batterie auszugleichen. Problematisch ist die schwer steuerbare Menge an Lithium, die zur Batterie hinzugegeben wird. Ein weiterer Aspekt ist die Verwendung von Nanostrukturen, die eine gleichmäßige Pre-lithiierung verhindert. Auch erfolgt die nachträgliche Pre-lithiierung im trockenen Prozess nur oberflächlich und damit ist die Anode generell sehr reaktiv und schwer handhabbar vergleichbar mit reiner Lithiumfolie. Die Zugabe als Pulver ist schwer kontrollierbar, und in der Zelle ist wieder reines reaktives Lithium vorhanden, das hochreaktiv, hygroskopisch ist und sehr schnell oxidiert. Die hohe Reaktivität des Lithiums führt für gewöhnlich zu einer ausgeprägten SEI Bildung, die während des Batteriebetriebs zu hohen Zellwiderständen führt. Weiterhin führen hohe Flächenströme, wie sie für Hochleistungsbatterien üblich sind, zur Bildung von Dendriten, d. h. baum- oder strauchartige Kristallstrukturen, die den Separator durchstoßen und zu Kurzschlüssen führen.

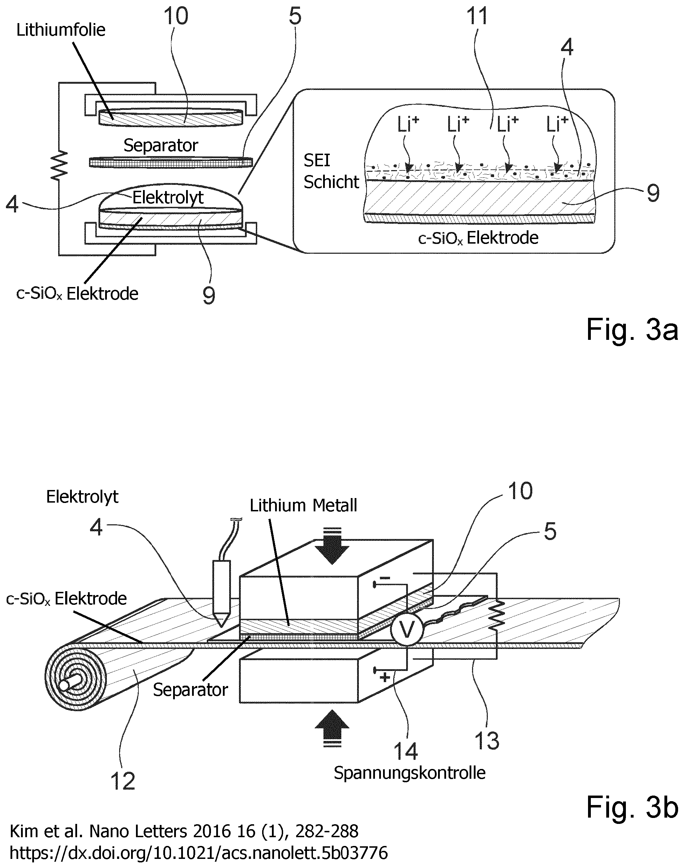

Es existieren für die elektrochemische Pre-Lithiierung Konzepte für eine Rolle-zu-Rolle Anlage, siehe Figur 3, jedoch ist das Konzept sehr komplex.

Figur 3a zeigt schematisch den Prozess der Vorlithiierung einer c-SiOₓ-Elektrode 9. Zwischen der c-SiOₓ-Elektrode 9 und einem Stück Lithium-Metallfolie 10 wird in Anwesenheit eines Elektrolyten 4 und eines Separators 5 ein elektrischer Kurzschluss hergestellt und damit die spontane Vorlithiierung durch die Potenzialdifferenz zwischen beiden Elektroden eingeleitet (Fig. 3a). Mittels des eingebauten Widerstands 13 kann die Geschwindigkeit der Vorlithiierung gesteuert werden. Der Endpunkt der Vorlithiierung wird durch die Zellenspannung 14 bestimmt, die während der gesamten Vorlithiierung überwacht wird. Figur 3b zeigt den Vorlithiierungsprozess in einer Rolle-zu-Rolle-Beschichtung.

Es ist daher die Aufgabe der vorliegenden Erfindung ein Verfahren anzugeben, welches geeignet ist, zusätzliches Lithium in die Silizium-Elektrode einzubringen, insbesondere um die Anfangsverluste auszugleichen und das für den industriellen Einsatz geeignet ist, ohne jedoch die Nachteile des Stands der Technik aufzuweisen.

Diese Aufgabe wird durch ein Verfahren gemäß dem unabhängigen Anspruchs 1 gelöst. Bei dem erfindungsgemäßen Verfahren zur Herstellung einer Silizium-Elektrode als Anode für eine Lithium-Ionen-Batterie, bei dem ein Silizium-Lagenaufbau auf ein Trägersubstrat aufgebracht wird, wird erfindungsgemäß die Silizium-Elektrode einer Pre-Lithiierung unterzogen, indem Lithium durch einen Prozess in den Silizium-Lagenaufbau eingebracht wird. Ein Silizium-Lagenaufbau ist gekennzeichnet durch die wiederholte Aufbringung von Silizium und wahlweise anderer funktionaler Schichten auf ein Substrat (engl. Multilayer bzw. Vielfachstapel). Es wird eine Schutzschicht aufgebracht und das eingebrachte Lithium wird durch eine anschließende Kurzzeittemperung mit einem gezielten Energieeintrag einer Reaktion mit dem Silizium-Lagenaufbau zu Lithiumsilizid dosiert und diffusionskontrolliert unterzogen.

Unter einer Kurzzeittemperung wird insbesondere die Blitzlampentemperung und / oder die Lasertemperung verstanden. Die Blitzlampentemperung erfolgt mit einer Pulsdauer bzw. Temperungszeit im Bereich von 0,3 bis 20 ms und einer Pulsenergie im Bereich von 0,3 bis 100 J/cm². Bei der Lasertemperung wird die Temperungszeit von 0,01 bis 100 ms durch die Scangeschwindigkeit der lokalen Erhitzungsstelle eingestellt, um eine Energiedichte von 0,1 bis 100 J/cm² zu erzeugen. Die in der Kurzzeittemperung erreichten Heizrampen liegen im für den im Verfahren notwendigen Bereich von 10^4-10^7 K/s. Die Blitzlampentemperung nutzt hierfür ein Spektrum im sichtbaren Wellenlängenbereich, wohingegen in der Lasertemperung diskrete Wellenlängen im Bereich des infraroten (IR)- bis ultravioletten (UV)-Spektrums verwendet werden.

Mit dem erfindungsgemäßen Verfahren lässt sich eine definierte Menge an Lithium in die Silizium-Elektrode ohne großen Aufwand einbauen. Anfangsverluste beim initialen Batteriebetrieb lassen sich dadurch gezielt ausgleichen und ermöglichen eine deutlich einfachere Balancierung von Kathode und Anode der Lithium-Ionen-Batterien.

Vorteilhaft ist, dass automatisch eine Abscheidung einer weiteren Deckschicht erfolgt, die als Schutzschicht fungiert, wie Silizium oder Kohlenstoff, so dass eine einfache Weiterprozessierung der Anode unterstützt wird.

Im erfindungsgemäßen Verfahren ermöglicht die anschließende Kurzzeittemperung die Stabilisierung der Lithiumschicht. Der gezielte Energieeintrag ermöglicht die gewünschte Verteilung des Lithiums in Silizium und wenn möglich eine Reaktion zu Lithiumsilizid unter Kontrolle der Diffusion, d. h. ist eine Sättigung erfolgt, endet die Reaktion zu Lithiumsilizid.

Ein vorteilhafter Energieeintrag wird erzielt, wenn die Blitzlampentemperung mit einer Pulsdauer im Bereich von 0,3 bis 20ms, mit einer Pulsenergie im Bereich von 0,3 bis 100J/cm² sowie mit einer Vorheizung oder Kühlung im Bereich von 4°C bis 200°C durchgeführt wird.

Wird als Kurzzeittemperung eine Lasertemperung verwendet, so wird eine Diffusion und Reaktion von Metall mit dem Silizium durch eine Temperungszeit im Bereich von 0,01 bis 100 ms durch das Einstellen einer Scangeschwindigkeit einer lokalen Erhitzungsstelle und einer Energiedichte im Bereich von 0,1 bis 100 J/cm² sowie eine Vorheizung oder Kühlung im Bereich von 4°C bis 200°C der Lasertemperung kontrolliert.

In einer Ausgestaltung des erfindungsgemäßen Verfahrens wird das Lithium in einem trockenen Prozess in den Silizium-Lagenaufbau eingebracht. Dies wird erst durch den einzigartigen Silizium-Lagenaufbau ermöglicht. Das Besondere an dem Silizium-Lagenaufbau ist das Vorhandensein von Mehrphasen im Bereich der Silizium-Schicht und des Metallsubstrats, wobei die Mehrphasen aus amorphem Silizium und/oder kristallinem Silizium des Siliziums der Silizium-Schicht und aus kristallinem Metall des Metallsubstrats und aus Silizid bestehen. Die mehrphasige Si-Lagenschicht weist freie Räume zum Auffangen der Volumenänderung bei der Lithiierung auf und sorgt somit für eine Stabilisierung des gesamten Materialverbunds. Das Lithium kann hierbei mit Hilfe eines trockenen Prozesses, beispielweise durch Kathodenzerstäubung (Sputtern), in beliebiger Menge als Zwischenschicht eingebaut und anschließend mit einer Schutzschicht versehen werden.

In einer weiteren Ausgestaltung des erfindungsgemäßen Verfahrens wird daher das Lithium durch Sputtern kontrolliert in den Silizium-Lagenaufbau eingebracht. Das Sputtern ist ein kontrollierbares Verfahren mit dem die Menge an Lithium, die in die Silizium-Elektrode eingebracht werden soll, präzise gesteuert werden kann. Das Lithium liegt dabei als Target in fester Form vor.

In einer anderen weiteren Ausgestaltung des erfindungsgemäßen Verfahrens wird das Lithium durch thermisches Verdampfen kontrolliert in den Silizium-Lagenaufbau eingebracht. Das thermische Verdampfen ist ein kontrollierbares Verfahren mit dem die Menge an Lithium, die in die Silizium-Elektrode eingebracht werden soll, präzise gesteuert werden kann. Das Lithium liegt dabei zunächst in fester Form vor, wird verflüssig und anschließend verdampft.

In einer anderen Ausgestaltung des erfindungsgemäßen Verfahrens wird das Lithium durch thermisch unterstütztes Walzen in den Silizium-Lagenaufbau eingebracht. Das thermisch unterstützte Walzen ist zwar ein weniger präzises Verfahren, um Lithium in die Silizium-Elektrode einzubringen, jedoch ist es sehr einfach durchzuführen. Das Lithium liegt dabei in fester Form vor.

In einer Ausgestaltung des erfindungsgemäßen Verfahrens wird das Lithium durch eine Lithiumschmelzabscheidung unter Vakuum oder in einer Inertgas-Atmosphäre in den Silizium-Lagenaufbau eingebracht. Die Lithiumschmelzabscheidung unter Vakuum oder in einer Inertgas-Atmosphäre ist ebenfalls ein weniger präzises Verfahren, um Lithium in die Silizium-Elektrode einzubringen, jedoch ist es ebenfalls einfach durchzuführen. Das Lithium liegt dabei als Ausgangsstoff in flüssiger Form vor. Das Besondere der Lithiumschmelzabscheidung ist die einfache Integrierbarkeit des Abscheideprozesses in einen flächigen Rolle-zu-Rolle-Prozess, bei dem das Lithium als Zwischenschicht in den Silizium-Lagenaufbau eingebracht wird. Eine Vorfunktionalisierung der Kupferschicht, also des Stromkollektors, z. B. durch Aufbringen einer Lage Silizium zur Steigerung der Benetzbarkeit von flüssigem Lithium, ist problemlos möglich.

In einer anderen Ausgestaltung des erfindungsgemäßen Verfahrens wird das Lithium separat als einzelne Schicht eingebracht oder es wird als Mischschicht, insbesondere aus Lithium und Silizium eingebracht.

In einer Ausgestaltung des erfindungsgemäßen Verfahrens wird die Schutzschicht aus Silizium oder Kohlenstoff oder Kupfer abgeschieden. Die Schutzschicht kann zusätzlich aus einer oder mehreren Lagen einer künstlichen Solid Electrolyte Interphase (SEI) gebildet werden, die in einem Vakuum- oder Inertgasprozess abgeschieden wird, z. B. einem ALD- (Atomic Layer deposition) Prozess. Vorteilhaft ist es, wenn die künstliche SEI aus Al₂O₃, TiO₂, SiO₂ und / oder LiOH gebildet wird, weil diese eine weitere Oxidation verhindern und trotzdem ausreichend durchlässig für Li+-Ionen während des Batteriebetriebs sind.

Das erfindungsgemäße Verfahren kann vorteilhafterweise zur Herstellung von Silizium-Elektroden als Anoden in Batterie-Zellen verwendet werden, bei denen das Lithium abweichend von der Kathode in die Batterie-Zelle zugefügt wird. Das Einbringen von Lithium abweichend von der Kathode bedeutet, dass das Lithium nicht über die Kathode der Batteriezelle zugeführt wird. Das ist bei neuartigen Zelltypen der Fall, beispielsweise Zelltypen der 3. Generation Lithium-Schwefel (Li-S) Batterien. Die Bezeichnung 3. Generation erfolgt als Trennung von den Li-Ionen-Batterien (2. Generation), weil der Transport zwischen Kathode und Anode nicht über Li+-Ionen erfolgt, sondern über eine Verbindung von Li₂S. Die gezielte Einbringung von Lithium in die Silizium-Elektrode als Anode bzw. die Pre-Lithiierung ermöglicht neue und innovative Zellkonzepte, für die bisher nur hochreaktives Lithium als Folie möglich schien.

Das erfindungsgemäße Verfahren kann vorteilhafterweise ebenfalls in Lithium-Schwefel-(Li-S) Batterien verwendet werden. Speziell für ressourcenschonende Aufbauten von Li-S Batterien mit Schwefel als Kathodenmaterial wird die erfindungsgemäß hergestellte Si-Anode daher als ideal angesehen. Schwefel hat als Kathodenmaterial die höchste bekannte Speicherdichte von Lithium mit bis zu 1600mAh/g. Damit werden Batterien mit höchster volumen- bzw. gravimetrischer Energiedichte ermöglicht. Sowohl Schwefel als auch Silizium sind als Ressource im Übermaß vorhanden, zusammen mit dem dosierten Einbringen von Lithium stellt dieses Konzept den ressourcenschonendsten Einsatz einer wiederverwendbaren Lithium-Batterie da.

Das erfindungsgemäße Verfahren kann vorteilhafterweise ebenfalls für den Aufbau einer Lithium-Ionen-Batterie mit einer Lithium-Nickel-Mangan-Cobalt-Oxid- (NMC), einer Lithium-Nickel-Cobalt-Aluminium-Oxid- (NCA) oder Lithium-Eisenphosphat (LFP)-Kathode verwendet werden.

Die Erfindung soll nachfolgend an einem Ausführungsbeispiel näher erläutert werden.

Die Zeichnungen zeigen
- Fig. 1: Beispielhafter Aufbau und Funktion einer Lithium-Ionen-Zelle beim Entladevorgang;
- Fig. 2: Einfluss der Pre-Lithiierung auf die Verfügbarkeit von Lithium in den ersten Ladezyklen einer Lithium-Ionen-Batterie;
- Fig. 3: Darstellung der a) Pre-Lithiierung, sowie die Anwendung in einer Rolle-zu-Rolle-Herstellung;
- Fig. 4: Schematische Darstellung des erfindungsgemäßen Verfahrens zur Herstellung einer Silizium-Elektrode als Anode für eine Lithium-Ionen-Batterie;
- Fig. 5: Schematische Darstellung einer Anlage für die Durchführung des erfindungsgemäßen Verfahrens;
- Fig. 6: Anwendung der mit dem erfindungsgemäßen Verfahren hergestellten Si-Anode in einer Li-S Batterie;
- Fig. 7: REM-SE-Aufnahme einer Aktivschicht von 3µm Silizium unterbrochen von jeweils 100nm Kupfer und 100nm Lithium hergestellt nach dem erfindungsgemäßen Verfahren.

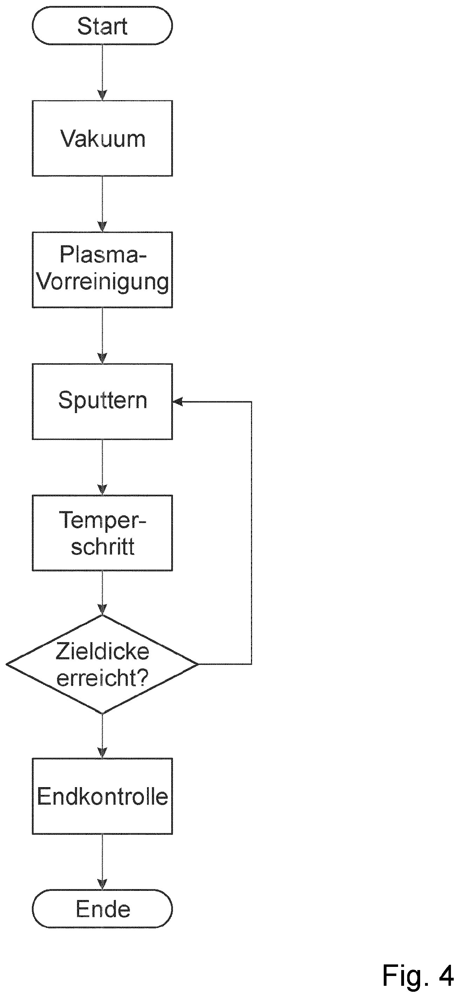

Figur 4 zeigt die erfindungsgemäßen Verfahrensschritte in einem Ablaufdiagramm. Ein Substrat, welches gleichzeitig als Stromkollektor dient, erfährt unter Vakuumbedingungen in einer Plasmaatmosphäre eine Vorreinigung. Anschließend erfolgt der Silizium-Lagenaufbau und die Pre-Lithiierung mittels Sputtern. Dabei wird sequentiell eine Si-/Li-Schicht aufgebracht, wobei die Lagen durch eine Blitzlampentemperung stabilisiert werden. Die Blitzlampentemperung ermöglicht einen gezielten Energieeintrag, mit dessen Hilfe der Silizium-Lagenaufbau zu Lithiumsilizid dosiert und diffusionskontrolliert gesteuert werden kann; d. h. ist eine Sättigung erfolgt, endet die Reaktion zu Lithiumsilizid. Bevorzugte Prozessparameter bei der Blitzlampentemperung liegen für die Pulsdauer im Bereich von 0,3 bis 20ms, für die Pulsenergie im Bereich von 0,3 bis 100J/cm² sowie ist eine Vorheizung oder Kühlung im Bereich von 4°C bis 200°C vorteilhaft. Die Schichten werden in verschiedenen Lagen solange aufgesputtert und mittels der Blitzlampentemperung stabilisiert, bis eine gewünschte Zieldicke erreicht ist. Dieses Verfahren ist sehr einfach durchzuführen.

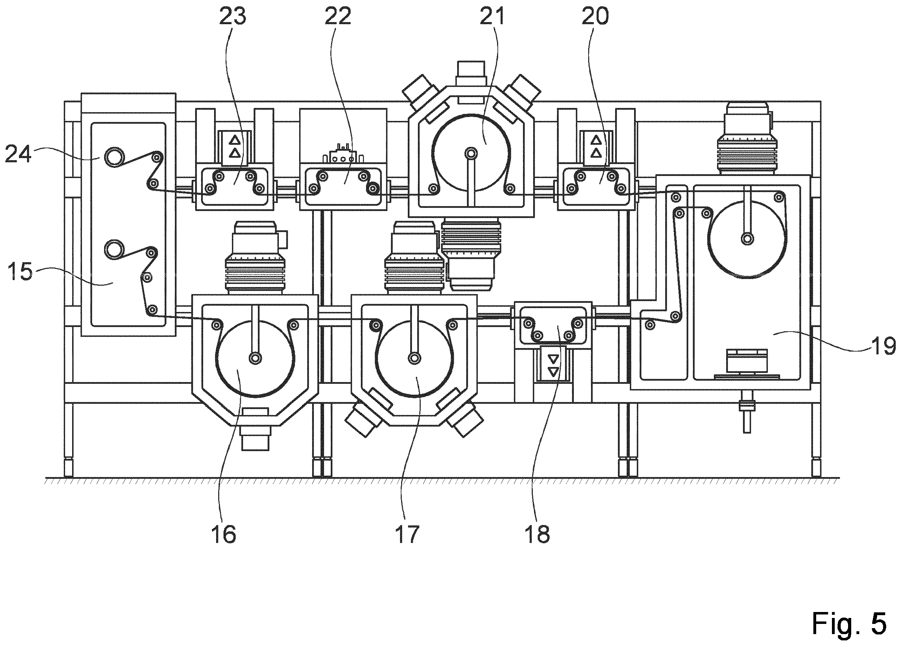

Figur 5 zeigt schematisch eine beispielhafte Anlage einer Rolle-zu-Rolle-Beschichtung zur Durchführung des erfindungsgemäßen Verfahrens. Für die Herstellung der Si-Elektrode als Anode 9 wird auf ein Metallsubstrat 2 eine Siliziumschicht bzw. ein Si-Lagenaufbau aufgebracht. Von einer ersten Rolle am Bandstart 15 wird z. B. eine Kupferfolie durch die Anlage geführt. Auf diese wird im Wechsel eine funktionale Schicht, anschließend Lagen aus Silizium und Lithium gesputtert 16, 17 und einer Kurzzeittemperung 18 mittels einer Blitzlampe unterzogen. Das Band kann jederzeit vor- und rückwärts durch die Anlage gefahren werden, um eine gewünschte Schichtstruktur aufzubringen. In die Kammern 16, 17, 21 können bis zu drei Quellen eingebaut werden, so dass sich bis zu je drei verschiedene Materialien pro Kammer abscheiden lassen. Entsprechend könnte in jeder Kammer Lithium eingebracht werden. Wichtig ist allerding die Einbettung in einen Schichtstapel, damit kein Lithium an die Oberfläche gelangt. Anschließend wird durch thermisches Verdampfen 19 Silizium aufgebracht und durch eine Kurzzeittemperung, insbesondere Blitzlampentemperung, 20 eine kontrollierte Umwandlung in Lithiumsilizid bewirkt. Weitere Lagen können durch Sputtern 21 aufgebracht werden. Eine abschließende Behandlung in einem (reaktiven) Plasma 22 ist möglich sowie eine finale Kurzzeittemperung, insbesondere Blitzlampentemperung, 23 zur Finalisierung des Stapels. Das beschichtete Substrat wird wieder auf eine Rolle aufgewickelt 24. Eine Kurzzeittemperung, insbesondere Blitzlampentemperung nach dem Aufbringen des Silizium-Lagenaufbaus kann u. a. die Bildung einer porösen Silizidmatrix ermöglichen, in der amorphes oder nanokristallines Silizium zusammen mit Hohlräumen bzw. Poren auftritt. Eine Silizidmatrix ist jedoch nicht zwingend erforderlich.

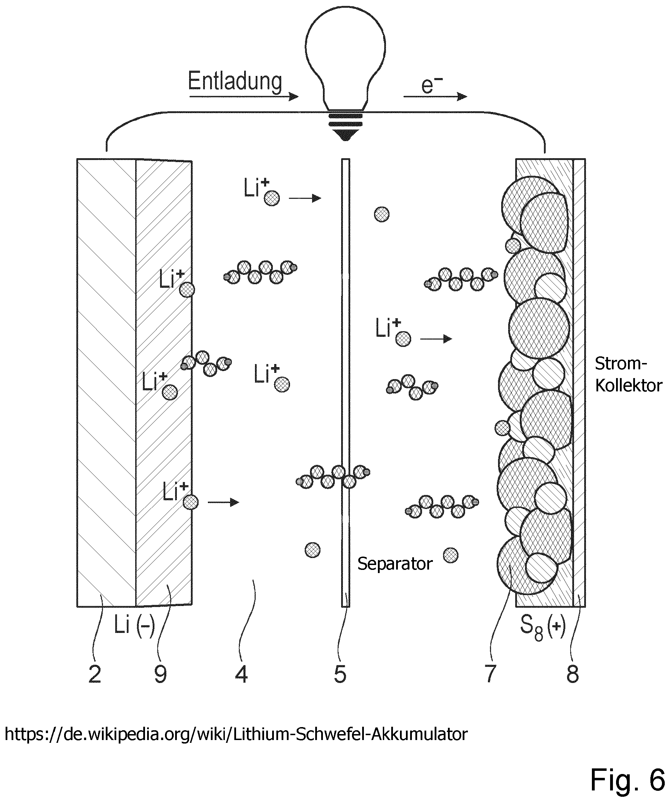

Figur 6 zeigt eine Anwendung der mit dem erfindungsgemäßen Verfahren hergestellten Si-Elektrode als Anode 9 in einer Li-S Batterie. Die gezielte Einbringung von Lithium in die Silizium-Anode 9 bzw. die Pre-Lithiierung ermöglicht neue und innovative Zellkonzepte, für die bisher nur hochreaktives Lithium als Folie möglich schien. Speziell für ressourcenschonende Aufbauten von Li-S Batterien mit Schwefel als Kathodenmaterial wird die mit dem erfindungsgemäßen Verfahren hergestellte Si-Anode als ideal angesehen. Schwefel hat als Kathodenmaterial die höchste bekannte Speicherdichte von Lithium mit bis zu 1600mAh/g. Sowohl Schwefel als auch Silizium sind als Ressource im Übermaß vorhanden, zusammen mit dem dosierten Einbringen von Lithium stellt dieses Konzept den ressourcenschonendsten Einsatz einer wiederverwendbaren Lithium Batterie dar.

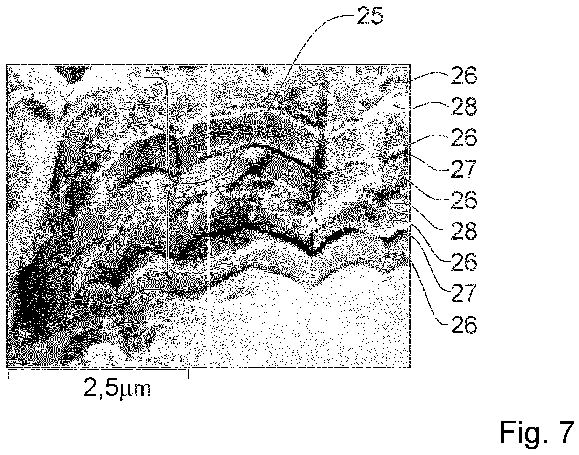

Das REM-SE Bild in Figur 7 zeigt eine Aktivschicht mit einer Schichtabfolge 25 von 3µm Silizium 26 unterbrochen von jeweils 100nm Kupfer 28 und 100nm Lithium 27. Die Materialien wurden mittels Sputtern in der in Figur 5 dargestellten Anlage abgeschieden.

### Bezugszeichenliste

- 1: Lithium-Ionen-Batterie
- 2: Kollektor auf Anoden-Seite
- 3: SEI-Solid-Electrolyte-Interphase
- 4: Elektrolyt
- 5: Separator
- 6: Leitende Zwischenphase
- 7: Kathode, positive Elektrode
- 8: Kollektor auf Kathodenseite
- 9: Anode, negative Elektrode
- 10: Lithiumfolie
- 11: Lithium-Ionen
- 12: Rolle
- 13: Widerstand
- 14: Zellenspannung
- 15: Bandstart
- 16: Erstes Sputtern, Sputtermodul
- 17: Zweites Sputtern, Sputtermodul
- 18: Erste Blitzlampentemperung, Kurzzeittemperung
- 19: Thermisches Verdampfen
- 20: Zweite Blitzlampentemperung, Kurzzeittemperung
- 21: Drittes Sputtern, Sputtermodul
- 22: Plasmareinigung
- 23: Dritte Blitzlampentemperung, Kurzzeittemperung
- 24: Bandende
- 25: Silizium-Lagenaufbau
- 26: Silizium
- 27: Lithium
- 28: Kupfer

## Patentansprüche

1. Verfahren zur Herstellung einer Silizium-Elektrode als Anode für eine Lithium-Ionen-Batterie, bei dem ein Silizium-Lagenaufbau auf ein Trägersubstrat aufgebracht wird, **dadurch gekennzeichnet, dass** die Silizium-Elektrode einer Pre-Lithiierung unterzogen wird, indem Lithium durch einen Prozess als Zwischenschicht in den Silizium-Lagenaufbau eingebracht wird, dass eine Schutzschicht aufgebracht wird und dass das eingebrachte Lithium durch eine anschließende Kurzzeittemperung mit einem gezielten Energieeintrag einer Reaktion mit dem Silizium-Lagenaufbau zu Lithiumsilizid dosiert und diffusionskontrolliert unterzogen wird, wobei die Kurzzeittemperung eine Blitzlampentemperung, die mit einer Pulsdauer im Bereich von 0,3 bis 20 ms und einer Pulsenergie im Bereich von 0,3 bis 100 J/cm² erfolgt, und / oder eine Lasertemperung ist, die mit einer Temperungszeit von 0,01 bis 100 ms durch die Scangeschwindigkeit der lokalen Erhitzungsstelle erfolgt, um eine Energiedichte von 0,1 bis 100 J/cm² zu erzeugen, und wobei das Lithium in einem trockenen Prozess in den Silizium-Lagenaufbau eingebracht wird, wobei die Schutzschicht aus Silizium oder Kohlenstoff oder Kupfer abgeschieden wird.

2. Verfahren zur Herstellung einer Silizium-Elektrode als Anode für eine Lithium-Ionen-Batterie nach Anspruch 1, **dadurch gekennzeichnet, dass** das Lithium durch Sputtern kontrolliert in den Silizium-Lagenaufbau eingebracht wird.

3. Verfahren zur Herstellung einer Silizium-Elektrode als Anode für eine Lithium-Ionen-Batterie nach Anspruch 1, **dadurch gekennzeichnet, dass** das Lithium durch thermisches Verdampfen kontrolliert in den Silizium-Lagenaufbau eingebracht wird.

4. Verfahren zur Herstellung einer Silizium-Elektrode als Anode für eine Lithium-Ionen-Batterie nach Anspruch 1, **dadurch gekennzeichnet, dass** das Lithium durch thermisch unterstütztes Walzen in den Silizium-Lagenaufbau eingebracht wird.

5. Verfahren zur Herstellung einer Silizium-Elektrode als Anode für eine Lithium-Ionen-Batterie nach Anspruch 1, **dadurch gekennzeichnet, dass** das Lithium durch eine Lithiumschmelzabscheidung unter Vakuum oder in einer Inertgas-Atmosphäre in den Silizium-Lagenstapel eingebracht wird.

6. Verfahren zur Herstellung einer Silizium-Elektrode als Anode für eine Lithium-Ionen-Batterie nach einem der Ansprüche 1 bis 5, **dadurch gekennzeichnet, dass** das Lithium separat als einzelne Schicht eingebracht wird.

7. Verfahren zur Herstellung einer Silizium-Elektrode als Anode für eine Lithium-Ionen-Batterie nach einem der Ansprüche 1 bis 5, **dadurch gekennzeichnet, dass** das Lithium als Mischschicht, insbesondere aus Lithium und Silizium eingebracht wird.

8. Verfahren zur Herstellung einer Silizium-Elektrode als Anode für eine Lithium-Ionen-Batterie nach Anspruch 1, **dadurch gekennzeichnet, dass** die Schutzschicht zusätzlich aus einer oder mehreren Lagen einer künstlichen Solid Electrolyte Interphase, SEI, gebildet wird, die in einem Vakuum- oder Inertgasprozess abgeschieden wird, wobei die künstliche SEI aus Al₂O₃, TiO₂, SiO₂ und / oder LiOH gebildet wird.

9. Verwendung des Verfahrens zur Herstellung einer Silizium-Elektrode als Anode für eine Lithium-Batterie gemäß den Ansprüchen 1 bis 8 in Batterie-Zellen, bei denen das Lithium abweichend von der Kathode in die Batterie-Zelle zugefügt wird.

10. Verwendung des Verfahrens zur Herstellung einer Silizium-Elektrode als Anode für eine Lithium-Batterie gemäß den Ansprüchen 1 bis 8 für den Aufbau einer Lithium-Schwefel-Batterie, mit Schwefel als Kathodenmaterial.

11. Verwendung des Verfahrens zur Herstellung einer Silizium-Elektrode als Anode für eine Lithium-Batterie gemäß den Ansprüchen 1 bis 8 für den Aufbau einer Lithium-Ionen Batterie mit einer Lithium-Nickel-Mangan-Cobalt-Oxid, NMC, einer Lithium-Nickel-Cobalt-Aluminium-Oxid, NCA, oder Lithium-Eisenphosphat, LFP, -Kathode.

## Claims

1. A method for producing a silicon electrode as an anode for a lithium-ion battery, wherein a stratified silicon construction is applied to a carrier substrate, **characterized in that** the silicon electrode is subjected to a prelithiation by introduction of lithium as an intermediate layer into the stratified silicon construction by a process, **in that** a protective layer is applied and **in that** the introduced lithium is subjected to metered and diffusion-controlled reaction with the stratified silicon construction to form lithium silicide by subsequent short-term annealing with a targeted energy input, wherein the short-term annealing is flash-lamp annealing performed with a pulse duration in the range of 0.3 to 20 ms and a pulse energy in the range of 0.3 to 100 J/cm², and/or laser annealing performed with an annealing time of 0.01 to 100 ms established through the rate of scanning of the local heating site, to generate an energy density of 0.1 to 100 J/cm², and wherein the lithium is introduced into the stratified silicon construction in a dry process, wherein the protective layer is deposited from silicon or carbon or copper.

2. The method for producing a silicon electrode as an anode for a lithium-ion battery as claimed in claim 1, **characterized in that** the lithium is introduced into the stratified silicon construction by controlled sputtering.

3. The method for producing a silicon electrode as an anode for a lithium-ion battery as claimed in claim 1, **characterized in that** the lithium is introduced into the stratified silicon construction by controlled thermal vaporization.

4. The method for producing a silicon electrode as an anode for a lithium-ion battery as claimed in claim 1, **characterized in that** the lithium is introduced into the stratified silicon construction by thermally assisted rolling.

5. The method for producing a silicon electrode as an anode for a lithium-ion battery as claimed in claim 1, **characterized in that** the lithium is introduced into the stratified silicon stack by lithium melt deposition under vacuum or in an inert gas atmosphere.

6. The method for producing a silicon electrode as an anode for a lithium-ion battery as claimed in any of claims 1 to 5, **characterized in that** the lithium is introduced separately as an individual layer.

7. The method for producing a silicon electrode as an anode for a lithium-ion battery as claimed in any of claims 1 to 5, **characterized in that** the lithium is introduced as a mixed layer, more particularly of lithium and silicon.

8. The method for producing a silicon electrode as an anode for a lithium-ion battery as claimed in claim 1, **characterized in that** the protective layer is additionally formed from one or more strata of an artificial solid-electrolyte interphase, SEI, which is deposited in a vacuum or inert-gas process, wherein the artificial SEI is formed from Al₂O₃, TiO₂, SiO₂ and/or LiOH.

9. The use of the method for producing a silicon electrode as an anode for a lithium battery as claimed in claims 1 to 8 in battery cells, wherein the lithium is added away from the cathode into the battery cell.

10. The use of the method for producing a silicon electrode as an anode for a lithium battery as claimed in claims 1 to 8 for the construction of a lithium-sulfur battery, with sulfur as cathode material.

11. The use of the method for producing a silicon electrode as an anode for a lithium battery as claimed in claims 1 to 8 for the construction of a lithium-ion battery with a lithium nickel manganese cobalt oxide, NMC, a lithium nickel cobalt aluminum oxide, NCA, or a lithium iron phosphate, LFP, cathode.

## Revendications

1. Procédé de fabrication d'une électrode en silicium servant d'anode pour une batterie lithium-ion, dans lequel une structure stratifiée en silicium est appliquée sur un substrat de support, **caractérisé en ce que** l'électrode en silicium est soumise à une pré-lithiation par introduction de lithium sous forme de couche intermédiaire dans la structure stratifiée en silicium selon un procédé, **en ce qu'**une couche protectrice est appliquée et **en ce que** le lithium introduit est soumis à une réaction dosée et contrôlée par diffusion avec la structure stratifiée en silicium pour former du siliciure de lithium par un recuit de courte durée avec un apport d'énergie ciblé, le recuit de courte durée étant un recuit par lampe flash réalisé avec une durée d'impulsion comprise entre 0,3 et 20 ms et une énergie d'impulsion comprise entre 0,3 et 100 J/cm², et/ou un recuit au laser réalisé avec un temps de recuit de 0,01 à 100 ms déterminé par la vitesse de balayage de la zone de chauffage locale, afin de générer une densité d'énergie de 0,1 à 100 J/cm² , et dans lequel le lithium est introduit dans la structure stratifiée en silicium dans un procédé à sec, la couche protectrice étant déposée à partir de silicium, de carbone ou de cuivre.

2. Procédé de fabrication d'une électrode en silicium servant d'anode pour une batterie lithium-ion selon la revendication 1, **caractérisé en ce que** le lithium est introduit dans la structure stratifiée en silicium par pulvérisation contrôlée.

3. Procédé de fabrication d'une électrode en silicium servant d'anode pour une batterie lithium-ion selon la revendication 1, **caractérisé en ce que** le lithium est introduit dans la structure stratifiée en silicium par vaporisation thermique contrôlée.

4. Procédé de fabrication d'une électrode en silicium servant d'anode pour une batterie lithium-ion selon la revendication 1, **caractérisé en ce que** le lithium est introduit dans la structure stratifiée en silicium par laminage assisté thermiquement.

5. Procédé de fabrication d'une électrode en silicium servant d'anode pour une batterie lithium-ion selon la revendication 1, **caractérisé en ce que** le lithium est introduit dans l'empilement stratifié de silicium par dépôt de lithium fondu sous vide ou dans une atmosphère de gaz inerte.

6. Procédé de fabrication d'une électrode en silicium servant d'anode pour une batterie lithium-ion selon l'une des revendications 1 à 5, **caractérisé en ce que** le lithium est introduit séparément sous forme d'une couche individuelle.

7. Procédé de fabrication d'une électrode en silicium servant d'anode pour une batterie lithium-ion selon l'une des revendications 1 à 5, **caractérisé en ce que** le lithium est introduit sous forme d'une couche mixte, plus particulièrement de lithium et de silicium.

8. Procédé de fabrication d'une électrode en silicium servant d'anode pour une batterie lithium-ion selon la revendication 1, **caractérisé en ce que** la couche protectrice est en outre formée d'une ou plusieurs couches d'une interface électrolyte solide artificielle, SEI, qui est déposée par un procédé sous vide ou sous gaz inerte, dans lequel la SEI artificielle est formée à partir de Al₂O₃ , TiO₂ , SiO₂ et/ou LiOH.

9. Utilisation du procédé de fabrication d'une électrode en silicium servant d'anode pour une batterie au lithium, tel que revendiqué dans les revendications 1 à 8, dans des cellules de batterie, dans lesquelles le lithium est introduit dans la cellule de batterie à l'opposé de la cathode.

10. Utilisation du procédé de fabrication d'une électrode en silicium servant d'anode pour une batterie au lithium selon les revendications 1 à 8 pour la construction d'une batterie lithium-soufre, avec du soufre comme matériau de cathode.

11. Utilisation du procédé de fabrication d'une électrode en silicium servant d'anode pour une batterie au lithium selon les revendications 1 à 8 pour la construction d'une batterie lithium-ion avec une cathode en oxyde de lithium-nickel-manganèse-cobalt, NMC, en oxyde de lithium-nickel-cobalt-aluminium, NCA, ou en phosphate de lithium-fer, LFP.
